**Europäisches Patentamt**

**European Patent Office**

**Office européen des brevets**

(19)

(11) Veröffentlichungsnummer: **0 246 387**

**A1**

(12)

# EUROPÄISCHE PATENTANMELDUNG

(21) Anmeldenummer: **86730082.4**

(22) Anmeldetag: **16.05.86**

(51) Int. Cl.⁴: **E21B 17/042**

(43) Veröffentlichungstag der Anmeldung:
**25.11.87 Patentblatt 87/48**

(84) Benannte Vertragsstaaten:
**AT BE CH DE FR GB IT LI LU NL SE**

(71) Anmelder: **MANNESMANN Aktiengesellschaft**
**Mannesmannufer 2**
**D-4000 Düsseldorf 1(DE)**

(72) Erfinder: **Niehaus, Norbert, Dr.-Ing.**
**Ambrosiusring 67**
**D-4030 Ratingen 1(DE)**
Erfinder: **Friehe, Werner**
**Papenbuschstrasse 87**
**D-4330 Mühlheim/Ruhr(DE)**
Erfinder: **Schwenk, Wilhelm, Prof. Dr.,**
**Dipl.-Chem.**
**Scheffelstrasse 26**
**D-4100 Duisburg 1(DE)**

(74) Vertreter: **Meissner, Peter E., Dipl.-Ing. et al**
**Meissner & Meissner Patentanwälte**
**Herbertstrasse 22**
**D-1000 Berlin 33 Grunewald(DE)**

(54) **Gewindeverbindung für die Herstellung und Ausrüstung von Erdbohrungen.**

(57) Die Erfindung betrifft eine Gewindeverbindung für die Herstellung und Ausrüstung von Erdbohrungen an unlegierten oder legierten Stahlrohren, die einen metallischen, unter hoher Flächenpressung stehenden Dichtungs - und/oder Gewindebereich aufweisen, die mindestens teilweise mit einer galvanisch aufgebrachten Schicht aus Nichteisenmetall versehen sind.

Aufgabe der Erfindung ist die Auswahl und Bemessung eines Werkstoffes für die galvanische Beschichtung aus der Gruppe der Nichteisenmetalle, der sich einerseits in den unlegierten oder legierten Stahlrohrwerkstoff gut einbindet und damit haftet und auch bei Mehrfachverschraubung zuverlässig Fressen verhindert. Gelöst wird diese Aufgabe dadurch, daß die Schicht aus Blei, Zink, Kadmium oder Wismut und ca. 1 bis ca. 10 % aus Zinn besteht und ca. 3 bis ca. 30 Mikrometer dick ist.

## Gewindeverbindung für die Herstellung und Ausrüstung von Erdbohrungen

Die Erfindung betrifft eine Gewindeverbindung gemäß dem Gattungsbegriff des Hauptanspruchs.

Derartige Verbindungen sind hohen mechanischen Belastungen ausgesetzt. Darüber hinaus müssen sie unter der Belastung auch noch verschraubbar, mehrfach verschraubbar und gasdicht sein. Stahlrohrwerkstoffe neigen hierbei zum Kaltverschweißen, dem sogenannten Fressen an den aufeinander gleitenden Flächen. Es ist deswegen schon mehrfach vorgeschlagen worden, die aufeinander gleitenden Flächen im Gewinde und am metallischen Dichtsitz mit einem Nichteisenmetall wie Kupfer oder Zinn zu beschichten. Wichtig ist dabei die Auswahl der bestgeeigneten Nichteisenmetalle und ihrer Haftfähigkeit auf dem Rohrwerkstoff.

Aufgabe der gegenwärtigen Erfindung ist die Auswahl und Bemessung eines Werkstoffes für die galvanische Beschichtung aus der Gruppe der Nichteisenmetalle, der sich einerseits in den unlegierten oder legierten Stahlrohrwerkstoff gut einbindet und damit haftet und auch bei Mehrfachverschraubung zuverlässig Fressen verhindert.

Die Lösung der Aufgabe ist durch die kennzeichnenden Merkmale des Hauptanspruchs bestimmt. Eine verbesserte Wirkung wird durch die Merkmale des Unteranspruchs erreicht.

Die erfindungsgemäße Gewindeverbindung zeigt unter hoher Flächenpressung im Gewinde keinerlei Verschweißungen. Die Verschraubung erfolgt ohne Schmiermittel, wodurch das Verschrauben vereinfacht und kostengünstig ist. Wegen der ausgezeichneten Haftung auf dem Grundwerkstoff erweist sich die Verbindung als besonders geeignet, zum Beispiel für Gestängerohre und Schwerstangen, die mit relativ grobem Gewinde versehen sind und vielmals verschraubt und entschraubt werden. Die Gewindeverbindung ermöglicht außerdem eine hermetische Abdichtung von der Art Metall auf Metall, wenn wenigstens eine der beiden Dichtflächen nichteisenmetallisch beschichtet ist. Die Verbindung empfiehlt sich deswegen auch für Futterrohre. Weil beide vorgenannten Eigenschaften gleichzeitig vorliegen, ist die Verbindund auch besonders für Förderrohre bei der Erdgasversorgung hervorragend geeignet. Die weitere Erläuterung der Verbindung und ihre Herstellung erfolgt an nachstehendem Ausführungsbeispiel.

Futterrohre und Förderrohre in Feldern mit Sauergas werden vielfach aus einem legierten Stahl mit der Bezeichnung X20 Cr13, was besagt, daß etwa 0,2 % Kohlenstoff und 13 % Chrom vorhanden sind, mit einer Streckgrenze von 555 N/qmm hergestellt, die mit Muffen verbunden sind. In diesem Fall werden die Muffen vor dem Verschrauben wie folgt behandelt:

1. Alkalische und elektrolytische Entfettung; elektrolytische Aktivierung und kathodische Vorbehandlung in Ni-haltiger Elektrolytlösung zur Erzielung einer Haftschicht;

2. elektrolytische Abscheidung einer Legierung aus rd. 90 % Blei und 10 % Zinn mit Hilfe eines dauren Elektrolyten auf der Basis Zinnfluoroborat, Bleifluoroborat und freier Fluoroborsäure mit einer Schichtdicke von rd. 15 um;

3. thermische Nachbehandlung zur langsamen Effusion des aufgenommenen Wasserstoffs rd. 30 min bei 150 Grad C;

4. Nachbehandlung zur Erzielung einer Diffusions-Haftschicht, 10 sec 250 Grad C im Ölbad.

### Ansprüche

1. Gewindeverbindung für die Herstellung und Ausrüstung von Erdbohrungen an unlegierten oder legierten Stahlrohren, die einen metallischen, unter hoher Flächenpressung stehenden Dichtungs- und/oder Gewindebereich aufweisen, die mindestens teilweise mit einer galvanisch aufgebrachten Schicht aus Nichteisenmetall versehen sind,
**dadurch gekennzeichnet,**
daß die Schicht aus Blei, Zink, Kadmium oder Wismut und ca. 1 bis ca. 10 % aus Zinn besteht und ca. 3 bis ca. 20 Mikrometer dick ist.

2. Gewindeverbindung nach Anspruch 1,
**dadurch gekennzeichnet,**
daß die mit einer Schicht versehenen Bereiche für einige Sekunden bis zu 50 Grad K über den Schmelzpunkt des Zinns erhitzt worden sind.

Europäisches
Patentamt

**EUROPÄISCHER RECHERCHENBERICHT**

Nummer der Anmeldung

EP 86 73 0082

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 513 995 (N. NIEHAUS)<br><br>* Spalte 1, Zeilen 53-68 *<br><br>--- | | E 21 B 17/042 |
| A | US-A-2 734 025 (E.J. ROEHL)<br><br>----- | | |

| | |
|---|---|
| | RECHERCHIERTE SACHGEBIETE (Int. Cl.4) |
| | E 21 B<br>C 25 D<br>F 16 L |

Der vorliegende Recherchenbericht wurde für alle Patentansprüche erstellt.

| Recherchenort | Abschlußdatum der Recherche | Prüfer |
|---|---|---|
| DEN HAAG | 14-01-1987 | NGUYEN THE NGHIEP |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82